# EUROPÄISCHE PATENTANMELDUNG

(11) **EP 4 446 604 A1**
(43) Veröffentlichungstag der Anmeldung: **16.10.2024**
(21) Anmeldenummer: 23168038.0
(22) Anmeldetag: 14.04.2023
(51) Int. Cl.: F16C 33/20, F16C 33/04

(54) **MEHRSCHICHTGLEITLAGER, EIN MIT DEM MEHRSCHICHTGLEITLAGER AUSGESTATTETES WINDKRAFTANLAGENGETRIEBE, SOWIE EIN VERFAHREN ZUM HERSTELLEN EINES MEHRSCHICHTGLEITLAGERS**

(71) Anmelder: Miba Gleitlager Austria GmbH, 4663 Laakirchen (AT)
(72) Erfinder: Die Erfindernennung liegt noch nicht vor
(74) Vertreter: Burger, Hannes

(57) **Zusammenfassung**

Die Erfindung betrifft ein Mehrschichtgleitlager (14) umfassend:
- einen Trägerkörper (15) mit einer Außenmantelfläche (19);
- einen Lagerkörper (16), welcher als Blechstreifen mit einem ersten Längsende (21) und einem zweiten Längsende (22) ausgebildet ist und die Außenmantelfläche (19) des Trägerkörpers (15) umschlingt;
wobei
das erste Längsende (21) des Lagerkörpers (16) am Trägerkörper (15) befestigt ist und dass das zweite Längsende (22) des Lagerkörpers (16) am Trägerkörper (15) befestigt ist.

## Beschreibung

Die Erfindung betrifft ein Mehrschichtgleitlager, ein mit dem Mehrschichtgleitlager ausgestattetes Windkraftanlagengetriebe, sowie ein Verfahren zum Herstellen eines Mehrschichtgleitlagers, sowie ein Verfahren zum Warten eines Mehrschichtgleitlagers.

Die EP3396187B1 offenbart ein Verfahren zum Herstellen eines Mehrschichtgleitlagers.

Das aus der EP3396187B1 offenbarte Verfahren ist aufwendig in der Herstellung des Mehrschichtgleitlagers, da hohe Anforderungen an die Formtoleranz des Mehrschichtgleitlagers gestellt werden, sodass dieses entsprechend auf eine Welle oder einen Bolzen appliziert werden kann.

Aufgabe der vorliegenden Erfindung war es, die Nachteile des Standes der Technik zu überwinden und ein Mehrschichtgleitlager, ein mit dem Mehrschichtgleitlager ausgestattetes Windkraftanlagengetriebe, sowie ein Verfahren zum Herstellen eines Mehrschichtgleitlagers, sowie ein Verfahren zum Warten eines Mehrschichtgleitlagers zur Verfügung zu stellen, welches die eingangs genannten Nachteile überwindet.

Diese Aufgabe wird durch eine Vorrichtung und ein Verfahren gemäß den Ansprüchen gelöst.

Erfindungsgemäß ist ein Mehrschichtgleitlager vorgesehen. Das Mehrschichtgleitlager umfasst:
- einen Trägerkörper mit einer Außenmantelfläche;
- einen Lagerkörper, welcher als Blechstreifen mit einem ersten Längsende und einem zweiten Längsende ausgebildet ist und die Außenmantelfläche des Trägerkörpers umschlingt. Das erste Längsende des Lagerkörpers ist am Trägerkörper befestigt und das zweite Längsende des Lagerkörpers ist am Trägerkörper befestigt.

Insbesondere kann vorgesehen sein, dass an einer Außenmantelfläche des Lagerkörpers eine Gleitfläche ausgebildet ist, welche ein Gleitlager charakterisiert.

In einer ersten Ausführungsvariante kann der Lagerkörper zur Gänze aus einem Lagermaterial gebildet sein.

Ein derartiges Lagermaterial kann beispielsweise eine Aluminium-Zinn-Legierung sein. In einer bevorzugten Ausführungsvariante kann das Lagermaterial AlSn25+, eine Aluminium-Zinn-Legierung mit 25% Zinnanteil und weiteren Legierungsbestandteilen sein. In Versuchen hat sich gezeigt, dass bei Verwendung eines Lagerkörpers aus diesem Material das Herstellverfahren überraschend effizient durchgeführt werden kann und das Mehrschichtgleitlager eine überraschend gute Langlebigkeit aufweisen kann. Insbesondere kann gegenüber Lagerkörpern aus einem anderen Material eine überraschend hohe Festigkeit der Verbindung zwischen dem Lagerkörper und dem Trägerkörper erzielt werden.

Weitere Aluminium-Zinn-Legierungen können z.B. AlSn40, AlSn20, AlSn25, AlSn10, AlSn6, etc. sein.

Alternativ dazu kann vorgesehen sein, dass der Lagerkörper aus einer Kupfer-Zinn-Legierung gebildet ist. Einsetzbare Lagermetalle auf Kupferbasis wären beispielsweise CuPb22Sn2, CuPb10Sn10, CuPb15Sn7, CuSn6, CuSn4 Znl. Insbesondere bleifreie Kupferlegierungen auf CuAl-, CuSn-, CuZn-, CuSnZn-, CuZnSn- sowie CuBi-Basis sind in Hinblick auf die geringere Umweltbelastung von Vorteil.

Außerdem kann vorgesehen sein, dass der Lagerkörper eine Kupferbasislegierung aufweist, wobei die Kupferbasislegierung zwischen 0,1 Gew.-% und 3 Gew.-% Schwefel, zwischen 0,01 Gew.-% und 4 Gew.-% Eisen, zwischen 0 Gew.-%, insbesondere 0,001 Gew.-%, und 2 Gew.-% Phosphor, zumindest ein Element aus einer ersten Gruppe bestehend aus Zink, Zinn, Aluminium, Mangan, Nickel, Silizium, Chrom und Indium von in Summe zwischen 0,1 Gew.-% und 49 Gew.-%, wobei der Anteil an Zink zwischen 0 Gew.-% und 45 Gew.-% beträgt, der Anteil an Zinn zwischen 0 Gew.-% und 40 Gew.-% beträgt, der Anteil an Aluminium zwischen 0 Gew.-% und 15 Gew.-% beträgt, der Anteil an Mangan zwischen 0 Gew.-% und 10 Gew.-% beträgt, der Anteil an Nickel zwischen 0 Gew.-% und 10 Gew.-% beträgt, der Anteil an Silizium zwischen 0 Gew.-% und 10 Gew.-% beträgt, der Anteil an Chrom zwischen 0 Gew.-% und 2 Gew.-% beträgt, und der Anteil an Indium zwischen 0 Gew.-% und 10 Gew.-% beträgt, und zumindest ein Element aus einer zweiten Gruppe bestehend aus Silber, Magnesium, Kobalt, Titan, Zirkonium, Arsen, Lithium, Yttrium, Calcium, Vanadium, Molybdän, Wolfram, Antimon, Selen, Tellur, Bismut, Niob, Palladium in einem Anteil von jeweils zwischen 0 Gew.-% und 1,5 Gew.-%, wobei der Summenanteil der Elemente der zweiten Gruppe zwischen 0 Gew.-% und 2 Gew.-% beträgt, enthält und den Rest auf 100 Gew.-% Kupfer sowie aus der Herstellung der Elemente stammende Verunreinigungen bilden. Besonders an einem derart zusammengesetzten Lagerkörper lässt sich das erfindungsgemäße Verfahren überraschend gut anwenden, sodass eine überraschend gute Verbindung zwischen dem Lagerkörper und dem Trägerkörper erreicht werden kann.

In einer alternativen Ausführungsvariante kann vorgesehen sein, dass der Lagerkörper selbst schon einen Schichtaufbau aufweist. Beispielsweise kann der Lagerkörper eine Gleitbeschichtung, eine Einlaufschicht oder eine sonstige Beschichtung aufweisen. Der Lagerkörper kann hierbei eine Stützschicht aufweisen, an welcher die Gleitbeschichtung, Einlaufschicht oder eine sonstige Beschichtung angeordnet sein kann.

Weiters kann es zweckmäßig sein, wenn der Trägerkörper an der Außenmantelfläche eine Ausnehmung aufweist, wobei das erste Längsende des Lagerkörpers in der Ausnehmung aufgenommen ist und mittels
einer formschlüssigen Verbindung oder
einer kraftschlüssigen Verbindung am Trägerkörper befestigt ist. Durch diese Maßnahme kann eine überraschend gute Verbindung zwischen dem Trägerkörper und dem Lagerkörper erreicht werden.

Ferner kann vorgesehen sein, dass eine erste Klemme ausgebildet ist, wobei die erste Klemme in der Ausnehmung aufgenommen ist, wobei die erste Klemme mittels eines ersten Befestigungsmittels, insbesondere einer Schraube, mit dem Trägerkörper gekoppelt ist, wobei das erste Längsende des Lagerkörpers zwischen einer ersten Klemmfläche der ersten Klemme und einer ersten Klemmgegenfläche des Trägerkörpers geklemmt ist. Mittels der ersten Klemme lässt sich eine einfache und wirksame Befestigung des ersten Endes des Lagerkörpers am Trägerkörper realisieren.

Darüber hinaus kann vorgesehen sein, dass eine zweite Klemme ausgebildet ist, wobei die zweite Klemme in der Ausnehmung aufgenommen ist, wobei die zweite Klemme mittels eines zweiten Befestigungsmittels, insbesondere einer Schraube, mit dem Trägerkörper gekoppelt ist, wobei das zweite Längsende des Lagerkörpers zwischen einer zweiten Klemmfläche der zweiten Klemme und einer zweiten Klemmgegenfläche des Trägerkörpers geklemmt ist. Mittels der zweiten Klemme lässt sich eine einfache und wirksame Befestigung des zweiten Endes des Lagerkörpers am Trägerkörper realisieren. Das Vorsehen einer ersten Klemme und einer zweiten Klemme bringt darüber hinaus den Vorteil mit sich, dass das erste Ende des Lagerkörpers und das zweite Ende des Lagerkörpers unabhängig voneinander am Trägerkörper fixiert werden können.

In einer weiteren Ausführungsvariante ist es auch denkbar, dass nur eine einzelne Klemme vorgesehen ist wobei das erste Ende des Lagerkörpers und das zweite Ende des Lagerkörpers gemeinsam mittels der Klemme am Trägerkörper fixiert werden können.

Vorteilhaft ist auch eine Ausprägung, gemäß welcher vorgesehen sein kann, dass die erste Klemmfläche und/oder die erste Klemmgegenfläche und/oder die zweite Klemmfläche und/oder die zweite Klemmgegenfläche eine Verzahnung aufweist. Eine derartige Verzahnung bringt den Vorteil mit sich dass dadurch die Haltekraft verbessert werden kann. Insbesondere kann vorgesehen sein, dass die Verzahnung in Form von V-Förmigen Spitzen beziehungsweise V-Förmigen Ausschnitten ausgebildet sind, welche sich in Achsrichtung des Trägerkörpers erstrecken.

Die Verzahnung kann eine Verzahnungshöhe zwischen 0,1mm und 10mm, insbesondere zwischen 0,5mm und 2mm, bevorzugt zwischen 0,8mm und 1,5mm aufweisen. Besonders eine derart ausgebildete Verzahnung kann eine gute Haltbarkeit mit sich bringen.

Weiters kann vorgesehen sein, dass die Verzahnung eine höhere Oberflächenhärte aufweist, als der Lagerkörper.

Gemäß einer Weiterbildung ist es möglich, dass die erste Klemme eine erste Klemmgleitfläche aufweist, wobei die erste Klemmgleitfläche an einer ersten Klemmgleitschicht ausgebildet ist. Insbesondere kann vorgesehen sein dass die Klemmgleitfläche an einem gemeinsamen Hüllzylinder mit der Lagerfläche angeordnet ist. Die Klemmgleitfläche kann somit eine Fortsetzung der Lagerfläche bilden. Dies bringt den Vorteil mit sich, dass über den Umfang verteilt eine gleichmäßige oder annähernd gleichmäßige Lastverteilung stattfinden kann.

Ferner kann es zweckmäßig sein, wenn die erste Klemme und/oder die zweite Klemme gegenüber der Außenmantelfläche des Trägerkörpers nach innen versetzt angeordnet sind. Durch diese Maßnahme kann erreicht werden, dass im Bereich der Klemme eine Ölverteilungsnut ausgebildet sein kann. Somit kann einfach ein hydrodynamisches Gleitlager realisiert werden.

Darüber hinaus kann vorgesehen sein, dass die erste Klemme eine erste Freistellung aufweist, welche im Wirkbereich des ersten Befestigungsmittels angeordnet ist, wodurch die erste Klemme federelastisch ausgebildet ist
oder
dass zwischen der ersten Klemme und dem ersten Befestigungsmittel eine Feder angeordnet ist. Durch die Federelastizität der ersten Klemme beziehungsweise durch das Federelement, welches zwischen dem ersten Befestigungsmittel und der ersten Klemme angeordnet ist, kann ein Ausgleich von unterschiedlichen Wärmedehnungen aufgrund unterschiedlicher Wärmedehnungskoeffizienten des Lagerkörpers und des Trägerkörpers beziehungsweise der Klemme, beziehungsweise des Befestigungsmittels erreicht werden.

Weiters kann vorgesehen sein, dass der Trägerkörper an der Außenmantelfläche eine Oberflächenstrukturierung aufweist. Durch diese Maßnahme kann eine verbesserte Anbindung des Lagerkörpers an den Trägerkörper erreicht werden. In einer ersten Ausführungsvariante kann vorgesehen sein, dass die Oberflächenstrukturierung durch eine Rändelung gebildet ist. Insbesondere kann vorgesehen sein, dass die Oberflächenstrukturierung in Form von links rechts Rändel ausgebildet ist. Eine derartige Rändelung kann beispielsweise mittels eines Drehmessers in die Oberfläche eingebracht werden.

Gemäß einer besonderen Ausprägung ist es möglich, dass der Lagerkörper eine Lagerkörperdicke zwischen 0,1mm und 5mm, insbesondere zwischen 0,5mm und 3mm, bevorzugt zwischen 1mm und 1,5mm aufweist. Besonders eine lagerkörperdicke im ausgewählten Bereich bringt den Vorteil mit sich, das zum einen eine ausreichende Festigkeit beziehungsweise Abschälfestigkeit des Lagerkörpers erreicht werden kann und zum anderen der Lagerkörper noch wirtschaftlich herstellbar ist.

Erfindungsgemäß ist ein Windkraftanlagengetriebe ausgebildet, welches ein Planetengetriebe ist. Das Windkraftanlagengetriebe umfasst:
- einen Planetenträger;
- ein Planetenrad;
- eine Planetenradachse.

Die Planetenradachse ist als Mehrschichtgleitlager nach einer der obigen Ausprägungen ausgebildet. Alternativ dazu ist an der Planetenradachse ein Mehrschichtgleitlager nach einer der obigen Ausprägungen angeordnet, insbesondere kann vorgesehen sein, dass die Planetenradachse fest im Planetenträger aufgenommen ist und das Planetenrad drehbar an der Planetenradachse aufgenommen ist.

Ein derart ausgebildetes Windkraftanlagengetriebe kann einfach hergestellt werden und ist darüber hinaus robust und kann somit eine hohe Lebensdauer aufweisen.

Erfindungsgemäß ist ein Verfahren zum Herstellen eines Mehrschichtgleitlagers vorgesehen. Das Verfahren umfasst die Verfahrensschritte:
- Bereitstellen eines Trägerkörpers mit einer Außenmantelfläche;
- Bereitstellen eines Lagerkörpers, welcher als Blechstreifen mit einem ersten Längsende und einem zweiten Längsende ausgebildet ist;
- Befestigen des ersten Längsendes des Lagerkörpers am Trägerkörper;
- Kontinuierliches Anlegen des Lagerkörpers an die Außenmantelfläche des Trägerkörpers;
- Befestigen des zweiten Längsendes des Lagerkörpers am Trägerkörper. Das erfindungsgemäße Verfahren bringt den Vorteil mit sich, dass ein derart ausgebildetes Mehrschichtgleitlager beziehungsweise ein nach dem Verfahren hergestelltes Mehrschichtgleitlager einfach und kostengünstig produziert werden kann. Besonders durch das Befestigen des ersten Längsendes des Lagerskörpers am Trägerkörper und dem anschließenden kontinuierlichen Anlegen des Lagerkörpers an die Außenmantelfläche des Trägerkörpers kann eine saubere Verbindung des Lagerkörpers mit dem Trägerkörper erreicht werden.

Ferner kann vorgesehen sein, dass zum kontinuierlichen Anlegen des Lagerkörpers an die Außenmantelfläche des Trägerkörpers ein Walzwerkzeug an den Trägerkörper angepresst wird, wobei der Lagerkörper zwischen dem Walzwerkzeug und dem Trägerkörper angeordnet ist und wobei
das Walzwerkzeug ortsfest angeordnet ist, wobei der Trägerkörper um eine Trägerkörpermittelachse gedreht wird und der Lagerkörper zwischen das Walzwerkzeug und den Trägerkörper eingezogen wird
oder
der Trägerkörper ortsfest angeordnet ist, wobei das Walzwerkzeug um eine Trägerkörpermittelachse geführt wird und der Lagerkörper zwischen das Walzwerkzeug und den Trägerkörper eingezogen wird. Dies bringt den Vorteil mit sich, dass durch diese Maßnahme ein sauberes Anlegen des Lagerkörpers an den Trägerkörper erreicht werden kann.

Insbesondere kann vorgesehen sein, dass ein Abstand des Walzwerkzeuges zur Außenmantelfläche des Trägerkörpers geringer ist als die ursprüngliche Dicke des Lagerkörpers. Dies bringt den Vorteil mit sich, dass hierbei während dem Walzprozess der Lagerkörper plastisch verformt wird und somit eine gute Anlage am Trägerkörper aufweisen kann.

In einer alternativen Ausführungsvariante kann vorgesehen sein, dass anstatt des Walzwerkzeuges ein Einzug vorgesehen ist, wobei der Einzug ebenfalls zum Andrücken des Lagerkörpers an den Trägerkörper bei einer Relativbewegung des Lagerkörpers und des Trägerkörpers zum Einzug dient. Der Einzug kann hierbei eine Abrundung aufweisen, sodass der Lagerkörper um die Abrundung gezogen werden kann.

Darüber hinaus kann vorgesehen sein, dass der Lagerkörper nach dem Befestigen am Trägerkörper mittels eines spanabhebenden Verfahrens, insbesondere durch Drehen, bearbeitet wird. Durch diese Maßnahme kann erreicht werden, dass die finale Gleitoberfläche des Trägerkörpers eine geringe Fertigungstoleranz aufweisen kann und somit die Gleitfläche gute Gleiteigenschaften aufweisen kann.

Erfindungsgemäß ist auch ein Verfahren zum Warten eines Mehrschichtgleitlagers nach einer der obigen Ausprägungen vorgesehen. Das Verfahren umfasst die Verfahrensschritte:
- Entfernen des Lagerkörpers vom Trägerkörper;
- Bereitstellen eines neuen Lagerkörpers, welcher als Blechstreifen mit einem ersten Längsende und einem zweiten Längsende ausgebildet ist;
- Befestigen des ersten Längsendes des neuen Lagerkörpers am Trägerkörper;
- Kontinuierliches Anlegen des neuen Lagerkörpers an die Außenmantelfläche des Trägerkörpers;
- Befestigen des zweiten Längsendes des neuen Lagerkörpers am Trägerkörper.

Erfindungsgemäße Verfahren bringt den Vorteil mit sich, dass der Wartungsprozess vereinfacht werden kann und somit eine kostengünstigere Wartung des Mehrschichtgleitlagers möglich ist.

Insbesondere bei Windkraftanlagen kann der Wartungsprozess durch diese Maßnahme vereinfacht werden, da hier zum einen sehr große Bauteile bzw. sehr große Mehrschichtgleitlager vorkommen und zum anderen die Zugänglichkeit der Mehrschichtgleitlager nur erschwert ermöglicht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Windkraftanlagengetriebe in Form eines Planetengetriebes in Seitenansicht geschnitten;
- Fig. 2: ein Querschnitt eines ersten Ausführungsbeispiels eines Mehrschichtgleitlagers;
- Fig. 3: eine Detailansicht des Querschnittes des ersten Ausführungsbeispiels des Mehrschichtgleitlagers;
- Fig. 4: eine Detailansicht des Querschnittes eines zweiten Ausführungsbeispiels des Mehrschichtgleitlagers;
- Fig. 5: eine Detailansicht des Querschnittes eines dritten Ausführungsbeispiels des Mehrschichtgleitlagers;
- Fig. 6: eine Detailansicht des Querschnittes eines vierten Ausführungsbeispiels des Mehrschichtgleitlagers;
- Fig. 7: eine Detailansicht des Querschnittes eines fünften Ausführungsbeispiels des Mehrschichtgleitlagers;
- Fig. 8: eine Detailansicht des Querschnittes eines sechsten Ausführungsbeispiels des Mehrschichtgleitlagers;
- Fig. 9: mögliche Verfahrensschritte eines Verfahrensablaufes zum Herstellen eines Mehrschichtgleitlagers;
- Fig. 10: eine Detailansicht des Querschnittes eines siebten Ausführungsbeispiels des Mehrschichtgleitlagers.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

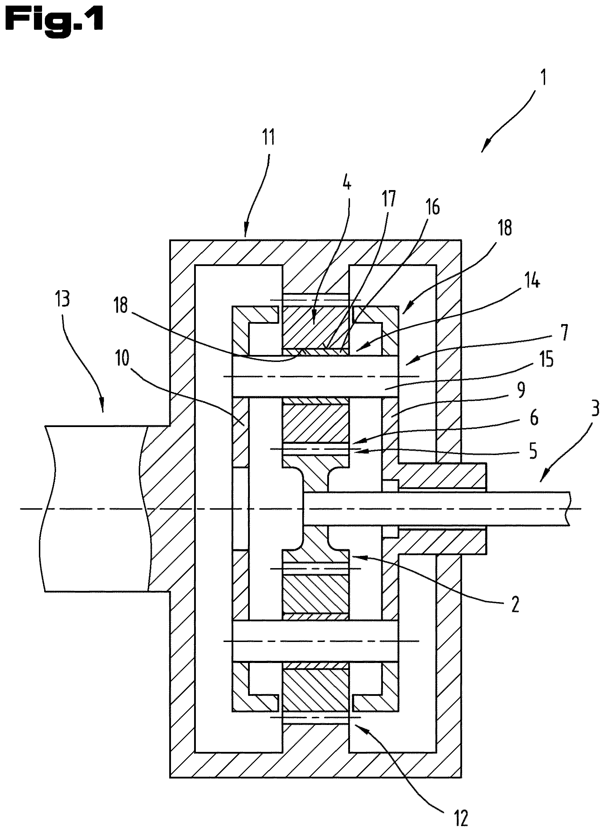

Fig. 1 zeigt ein Windkraftanlagengetriebe 1 in Form eines einfachen Planetengetriebes in Seitenansicht geschnitten.

Das Planetengetriebe 1 weist ein Sonnenrad 2 auf, das mit einer Welle 3, die zum Generatorrotor führt, bewegungsgekoppelt ist. Das Sonnenrad 2 ist von mehreren Planetenrädern 4, beispielsweise zwei, vorzugsweise drei oder vier, umgeben. Sowohl das Sonnenrad 2 als auch die Planetenräder 4 können außenliegende Verzahnungen 5, 6, wie etwa Evolventenverzahnungen aufweisen, die in kämmenden Eingriff miteinander stehen, wobei diese Verzahnungen 5, 6 in Fig. 1 schematisch dargestellt sind. Anstatt einer Evolventenverzahnung kann für die Verzahnung 5, 6 natürlich auch jegliche andere Verzahnung zum Einsatz kommen.

Die Planetenräder 4 können mittels einer Planetenradachse 7 im Planetenträger 8 gelagert sein. Im Planetenträger 8 kann ein erster Aufnahmeabschnitt 9 und ein zweiter Aufnahmeabschnitt 10 vorgesehen sein, in welchen die Planetenradachse 7 aufgenommen, insbesondere geklemmt sein kann. Die Planetenräder 4 können hierbei drehbar an der Planetenradachse 7 gelagert sein.

In einem alternativen Ausführungsbeispiel kann auch vorgesehen sein, dass die Planetenräder 4 fest mit einer Planetenradachse 7 gekoppelt sind und die Planetenradachse 7 drehbar im ersten Aufnahmeabschnitt 9 und im zweiten Aufnahmeabschnitt 10 angeordnet sind.

Weiters kann vorgesehen sein, dass die Planetenräder 4 umgebend ein Hohlrad 11 ausgebildet ist, welches eine Innenverzahnung 12 aufweist, die in kämmendem Eingriff mit der Verzahnung 6 der Planetenräder 4 steht. Das Hohlrad 11 kann mit einer Rotorwelle 13 des Rotors der Windkraftanlage bewegungsgekoppelt sein.

Es sei darauf hingewiesen, dass im Folgenden hinsichtlich des Planetenrades 4 die Einzahl verwendet wird. Es versteht sich aber von selbst, dass sämtliche Planetenräder 4 erfindungsgemäß ausgebildet sein können.

Wie aus Fig. 1 weiters ersichtlich, kann vorgesehen sein, dass die Planetenradachse 7 ein Mehrschichtgleitlager 14 umfasst bzw. als Mehrschichtgleitlager 14 ausgebildet ist. Insbesondere kann vorgesehen sein, dass das Mehrschichtgleitlager 14 einen Trägerkörper 15 und einen Lagerkörper 16 umfasst. Am Lagerkörper 16 kann eine Gleitfläche 17 ausgebildet sein. Die Gleitfläche 17 kann zusammen mit einer Gegenfläche 18 eine Gleitlagerung bilden. Wie aus dem Ausführungsbeispiel nach Fig. 1 ersichtlich, kann vorgesehen sein, dass die Gegenfläche 18 beispielsweise im Planetenrad 4 ausgebildet ist. Somit kann mittels des Lagerkörpers 16 das Planetenrad 4 drehbar an der Planetenradachse 7 angeordnet sein. Insbesondere kann vorgesehen sein, dass die Planetenradachse 7 durch den Trägerkörper 15 des Mehrschichtgleitlagers 14 gebildet ist.

In einer alternativen Ausführungsvariante ist es natürlich auch denkbar, dass der Lagerkörper 16 zwischen der Planetenradachse 7 und dem Planetenträger 8 ausgebildet ist. Bei dieser Ausführungsvariante kann die Planetenradachse 7 drehbar im Planetenträger 8 aufgenommen sein.

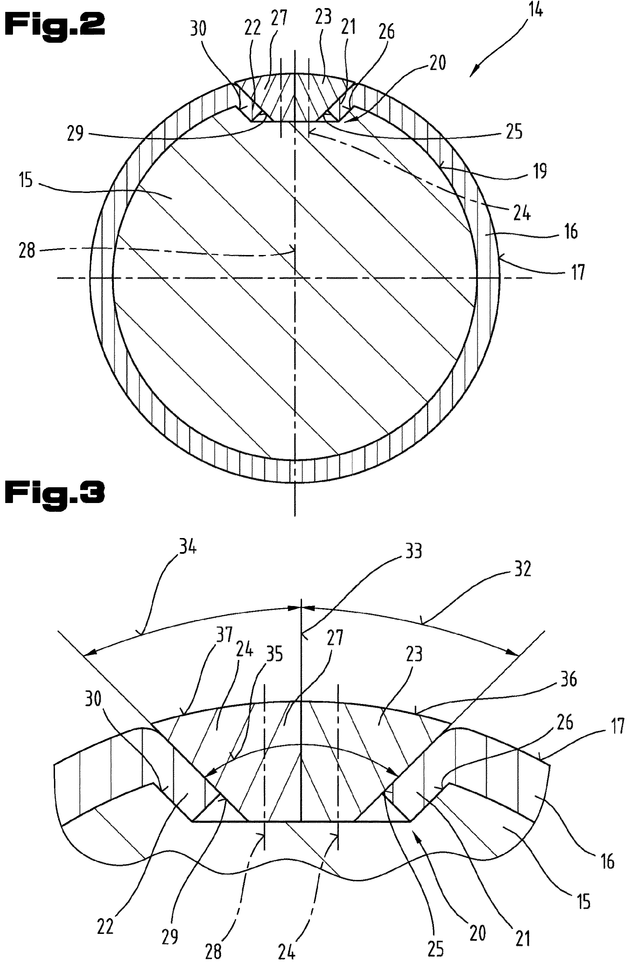

Fig. 2 zeigt ein erstes Ausführungsbeispiel des Mehrschichtgleitlagers 14. Das Mehrschichtgleitlager 14 kann beispielsweise, wie bereits beschrieben, in einem Windkraftanlagengetriebe, insbesondere einem Planetengetriebe, eingesetzt werden. Natürlich ist es auch denkbar, dass das Mehrschichtgleitlager 14 in einer anderen Anwendung eingesetzt wird.

Wie aus Fig. 2 ersichtlich, kann vorgesehen sein, dass der Trägerkörper 15 des Mehrschichtgleitlagers 14 in Form einer Achse oder einer Welle ausgeführt ist. Weiters ist es auch denkbar, dass der Trägerkörper 15 des Mehrschichtgleitlagers 14 als hohlzylindrisches Bauteil ausgebildet ist und somit das Mehrschichtgleitlager 14 insgesamt in Form einer Lagerbüchse ausgebildet ist, welche an einer Achse oder einer Welle appliziert wird.

Im vorliegenden Ausführungsbeispiel nach Fig. 2 ist der Trägerkörper 15 des Mehrschichtgleitlagers 14 in Form eines Vollzylinders ausgebildet. Wie aus der Querschnittansicht nach Fig. 2 gut ersichtlich, kann vorgesehen sein, dass der Lagerkörper 16 in Form eines Blechstreifens ausgebildet ist, welcher an eine Außenmantelfläche 19 des Trägerkörpers 15 angelegt ist bzw. diesen umschlingt.

Insbesondere kann hierbei vorgesehen sein, dass im Trägerkörper 15 eine Ausnehmung 20 ausgebildet ist, in welche ein erstes Längsende 21 und ein zweites Längsende 22 des Lagerkörpers 16 einragen. Mit anderen Worten ausgedrückt, kann der Lagerkörper 16, welcher als Blechstreifen ausgebildet ist, sich zwischen dem ersten Längsende 21 und dem zweiten Längsende 22 erstrecken. Der Lagerkörper 16 kann den Trägerkörper 15 somit umschlingen.

Insbesondere kann vorgesehen sein, dass das erste Längsende 21 mittels einer formschlüssigen Verbindung und/oder einer kraftschlüssigen Verbindung in der Ausnehmung 20 fixiert ist. Weiters kann vorgesehen sein, dass das zweite Längsende 22 mittels einer formschlüssigen Verbindung und/oder einer kraftschlüssigen Verbindung in der Ausnehmung 20 fixiert ist.

Insbesondere kann vorgesehen sein, dass eine erste Klemme 23 ausgebildet ist, mittels welcher das erste Längsende 21 des Lagerkörpers 16 in der Ausnehmung 20 geklemmt ist. Die erste Klemme 23 kann mittels eines ersten Befestigungsmittels 24 mit dem Trägerkörper 15 gekoppelt sein. Insbesondere kann vorgesehen sein, dass das erste Längsende 21 des Lagerkörpers 16 zwischen einer ersten Klemmfläche 25 der ersten Klemme 23 und einer ersten Klemmgegenfläche 26 geklemmt ist. Die erste Klemmgegenfläche 26 kann hierbei in der Ausnehmung 20 ausgebildet sein.

Weiters kann vorgesehen sein, dass eine zweite Klemme 27 ausgebildet ist, mittels welcher das zweite Längsende 22 des Lagerkörpers 16 in der Ausnehmung 20 geklemmt ist. Die zweite Klemme 27 kann mittels eines zweiten Befestigungsmittels 28 mit dem Trägerkörper 15 gekoppelt sein. Insbesondere kann vorgesehen sein, dass das zweite Längsende 22 des Lagerkörpers 16 zwischen einer zweiten Klemmfläche 29 der zweiten Klemme 27 und einer zweiten Klemmgegenfläche 30 geklemmt ist. Die zweite Klemmgegenfläche 30 kann hierbei in der Ausnehmung 20 ausgebildet sein.

Fig. 3 zeigt eine Detailansicht der Ausnehmung 20 sowie der daran aufgenommenen, ersten Längsende 21 und zweiten Längsende 22 des Lagerkörpers 16 sowie die erste Klemme 23 und die zweite Klemme 27, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass die erste Klemmfläche 25 in einem ersten Öffnungswinkel 32 zu einer Symmetrieebene 33 der Ausnehmung 20 angeordnet ist. Weiters kann vorgesehen sein, dass die zweite Klemmfläche 29 in einem zweiten Öffnungswinkel 34 zur Symmetrieebene 33 angeordnet ist. Der erste Öffnungswinkel 32 und der zweite Öffnungswinkel 34 können gleich groß sein. Insbesondere kann vorgesehen sein, dass der erste Öffnungswinkel 32 und der zweite Öffnungswinkel 34 jeweils zwischen 15° und 60°, insbesondere zwischen 20° und 55°, bevorzugt zwischen 40° und 50° beträgt.

Weiters kann vorgesehen sein, dass die erste Klemmgegenfläche 26 und die zweite Klemmgegenfläche 30 in einem Ausnehmungsöffnungswinkel 35 zueinander angeordnet sind. Der Ausnehmungsöffnungswinkel 35 kann so groß sein wie der erste Öffnungswinkel 32 und der zweite Öffnungswinkel 34 zusammen. Mit anderen Worten ausgedrückt, kann der Ausnehmungsöffnungswinkel 35 doppelt so groß sein wie der erste Öffnungswinkel 32.

Wie aus Fig. 3 weiters ersichtlich, kann vorgesehen sein, dass an der ersten Klemme 23 eine erste Klemmgleitfläche 36 ausgebildet ist. Weiters kann vorgesehen sein, dass an der zweiten Klemme 27 eine zweite Klemmgleitfläche 37 ausgebildet ist. Die erste Klemmgleitfläche 36 und die zweite Klemmgleitfläche 37 können am selben virtuellen Hüllzylinder angeordnet sein, wie die Gleitfläche 17. Insbesondere kann vorgesehen sein, dass im Betrieb des Mehrschichtgleitlagers 14 die erste Klemmgleitfläche 36 und die zweite Klemmgleitfläche 37 an der Gegenfläche 18 des Lagerpartners anliegen.

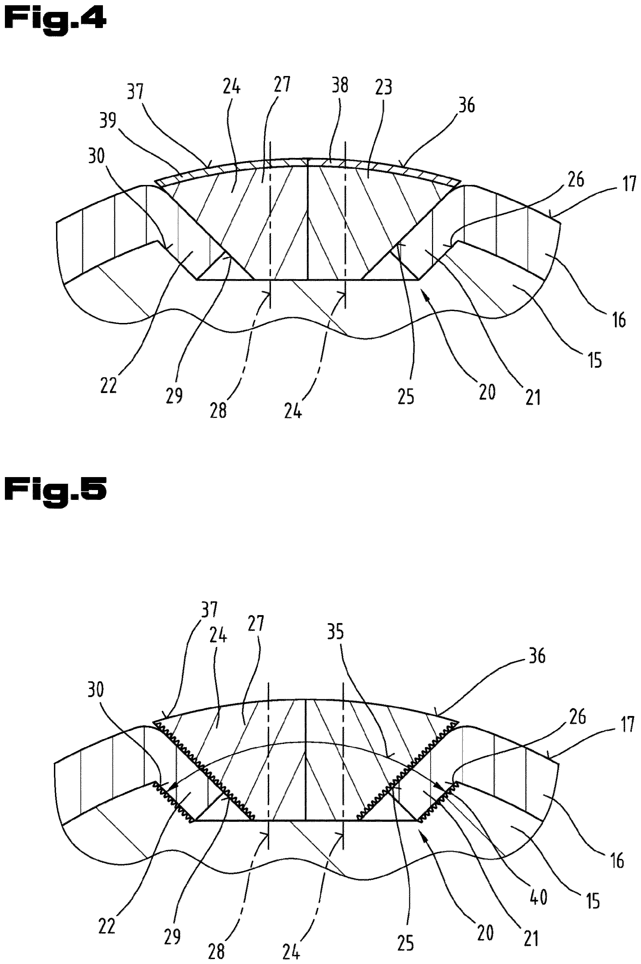

In der Fig. 4 ist eine weitere und gegebenenfalls für sich eigenständige Ausführungsform des Mehrschichtgleitlagers 14 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass die erste Klemmgleitfläche 36 an einer ersten Klemmgleitschicht 38 angeordnet ist. Weiters kann vorgesehen sein, dass die zweite Klemmgleitfläche 37 an einer zweiten Klemmgleitschicht 39 angeordnet ist. Die erste Klemmgleitschicht 38 kann als Oberflächenbeschichtung an der ersten Klemme 23 ausgebildet sein. Die zweite Klemmgleitschicht 39 kann als Oberflächenbeschichtung an der zweiten Klemme 27 ausgebildet sein. Die Klemmgleitschicht 38, 39 kann beispielsweise aus einem Gleitlagerwerkstoff gebildet sein. Insbesondere kann vorgesehen sein, dass die Klemmgleitschicht 38, 39 auf die Klemme 23, 27 walzplattiert ist.

In der Fig. 5 ist eine weitere und gegebenenfalls für sich eigenständige Ausführungsform des Mehrschichtgleitlagers 14 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass die erste Klemmfläche 25 und/oder die erste Klemmgegenfläche 26, und/oder die zweite Klemmfläche 29 und/oder die zweite Klemmgegenfläche 30 eine Oberflächenstrukturierung, wie etwa eine Verzahnung, aufweisen. Durch eine derartige Oberflächenstrukturierung kann die Haltekraft der Klemmen 23, 27 erhöht werden. Insbesondere kann vorgesehen sein, dass im betriebsbereiten Zustand des Mehrschichtgleitlagers 14 die Oberflächenstrukturierung in den Lagerkörper 16 eingepresst ist bzw. eindringt. Die Oberflächenstrukturierung kann in Form von V-förmig ausgebildeten Rillen ausgebildet sein. Insbesondere können sich die V-förmig ausgebildeten Rillen in einer Längsrichtung bzw. Achsrichtung des Trägerkörpers 15 erstrecken.

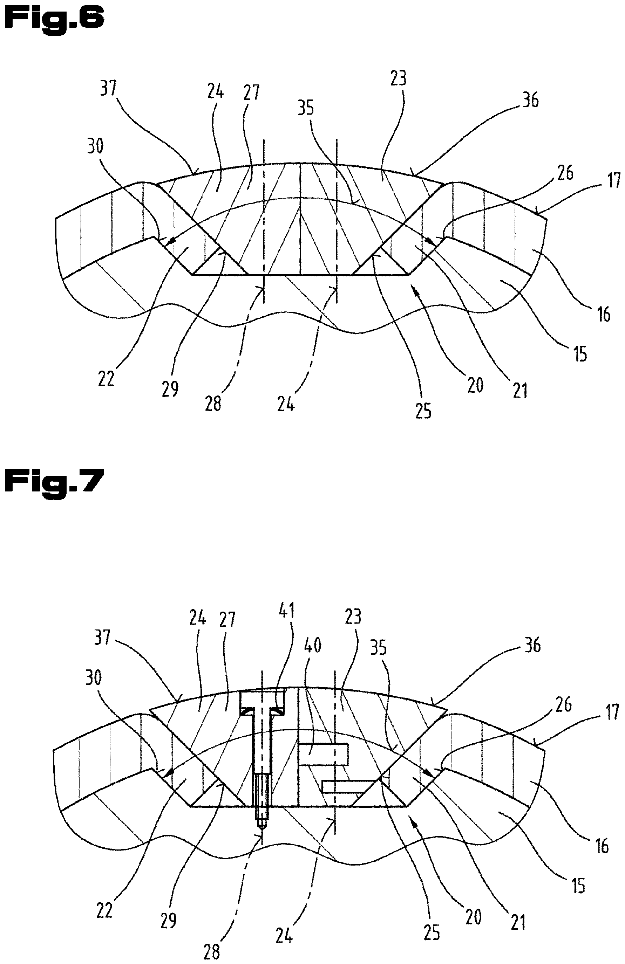

In der Fig. 6 ist eine weitere und gegebenenfalls für sich eigenständige Ausführungsform des Mehrschichtgleitlagers 14 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass die erste Klemmgleitfläche 36 bzw. die zweite Klemmgleitfläche 37 gegenüber der Gleitfläche 17 nach innen versetzt sind. Somit können die erste Klemmgleitfläche 36 und die zweite Klemmgleitfläche 37 im betriebsbereiten Zustand des Mehrschichtgleitlagers 14 in einem Abstand zur Gegenfläche 18 angeordnet sein. Dieser Abstand kann beispielsweise als Ölverteilungsnut für Schmieröl genutzt werden. Insbesondere kann die dadurch entstehende Vertiefung als Ölverteilungsnut eines hydrodynamischen Gleitlagers genutzt werden.

In der Fig. 7 ist eine weitere und gegebenenfalls für sich eigenständige Ausführungsform des Mehrschichtgleitlagers 14 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass in der ersten Klemme 23 eine erste Freistellung 40 ausgebildet ist. Die erste Freistellung 40 kann mehrere Teilfreistellungen umfassen, welche beispielsweise in Axialrichtung des ersten Befestigungsmittels 24 hintereinander angeordnet sein können. Diese Teilfreistellungen können aus unterschiedlichen Seiten in die erste Klemme 23 eingebracht sein. Durch diese Maßnahme kann erreicht werden, dass nach dem Faltprinzip eine gleichmäßige Komprimierung der ersten Klemme 23 erreicht wird, ohne dass dabei die erste Klemme 23 verkippt.

Insbesondere kann die erste Freistellung 40 derart ausgebildet sein, dass diese in Wirkrichtung des ersten Befestigungsmittels 24 liegt. Somit kann die erste Klemme 23 eine Eigenelastizität aufweisen, wodurch etwaige Wärmedehnungen ausgeglichen werden können. Durch diese Maßnahme kann eine konstante Klemmung des ersten Längsendes 21 des Lagerkörpers 16 erreicht werden. Natürlich kann analog dazu die zweite Klemme 27 ebenfalls die Freistellung 40 bzw. mehrere Freistellungen 40 aufweisen.

Ebenfalls in Fig. 7 ist eine weitere alternative Ausführungsvariante dargestellt, welche anhand der zweiten Klemme 27 beschrieben wird. Wie hierbei ersichtlich, kann vorgesehen sein, dass das Befestigungsmittel 28 beispielsweise in Form einer Schraube ausgebildet ist. Unter dem Schraubenkopf kann eine Feder 41 angeordnet sein. Mit anderen Worten ausgedrückt, kann die Feder 41 zwischen dem Schraubenkopf und der Klemme 23, 27 wirken. Eine derartige Feder 41 kann beispielsweise eine Tellerfeder sein.

Zusätzlich oder alternativ kann die Schraube zum Befestigen der Klemme 23, 27 als Dehnschraube ausgebildet sein.

Eine derartige Ausführungsvariante, wie sie in Zusammenhang mit der zweiten Klemme 27 beschrieben ist kann natürlich sowohl zum Befestigen der ersten Klemme 23 als auch zum Befestigen der zweiten Klemme 27 ausgebildet sein.

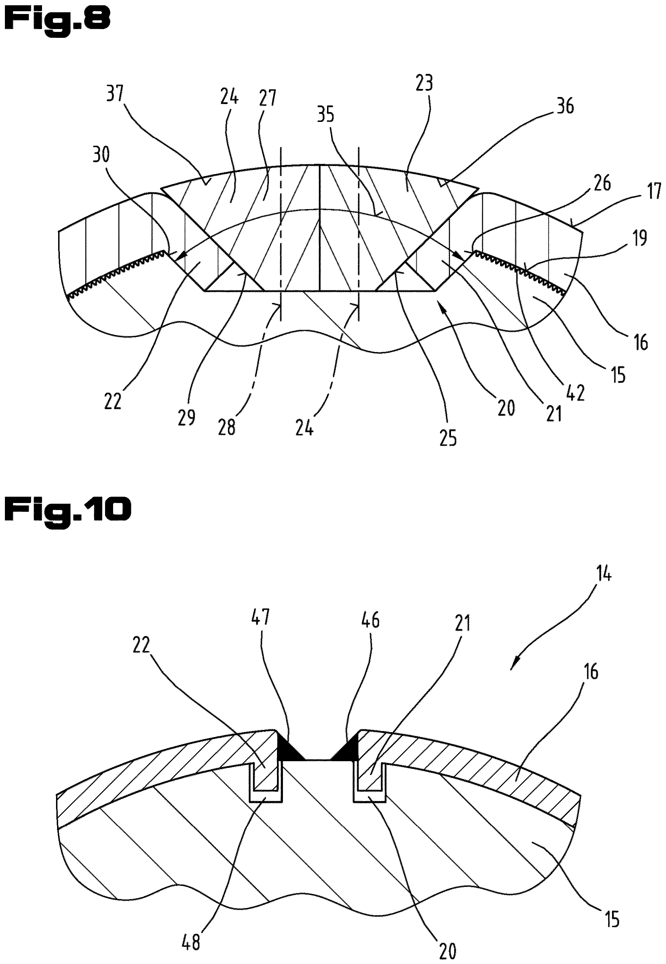

In der Fig. 8 ist eine weitere und gegebenenfalls für sich eigenständige Ausführungsform des Mehrschichtgleitlagers 14 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass an der Außenmantelfläche 19 des Trägerkörpers 15 eine Oberflächenstrukturierung 42 angeordnet ist. Die Oberflächenstrukturierung 42 kann zur verbesserten Verbindung des Lagerkörpers 16 mit dem Trägerkörper 15 dienen.

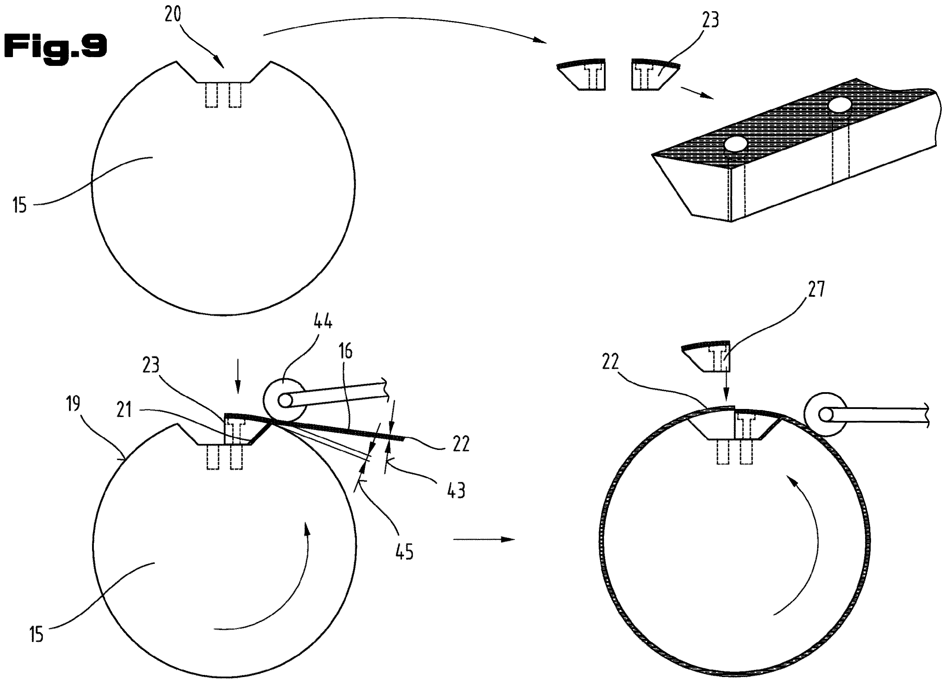

Fig. 9 zeigt einen möglichen Verfahrensablauf zur Herstellung des Mehrschichtgleitlagers 14, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Wie aus Fig. 9 ersichtlich, kann in einem ersten Verfahrensschritt der Trägerkörper 15 mit der darin ausgebildeten Ausnehmung 20 bereitgestellt werden. Weiters können der blechstreifenförmige und somit ebene Lagerkörper 16 mit seinem ersten Längsende 21 und seinem zweiten Längsende 22 bereitgestellt werden. Der ursprünglich bereitgestellte Lagerkörper 16 kann hierbei eine Lagerkörperdicke 43 aufweisen.

In einem weiteren Verfahrensschritt kann das erste Längsende 21 des Lagerkörpers 16 mittels der Klemme 23 am Trägerkörper 15 befestigt werden. Anschließend kann ein Walzwerkzeug 44 bereitgestellt werden, mittels welchem der Lagerkörper 16 auf den Trägerkörper 15 aufgewalzt werden kann. Das Walzwerkzeug 44 kann hierbei in einem Walzwerkzeugabstand 45 zur Außenmantelfläche 19 des Trägerkörpers 15 angeordnet sein. Insbesondere kann vorgesehen sein, dass der Walzwerkzeugabstand 45 geringfügig kleiner ist als die Lagerkörperdicke 43. Dadurch kann erreicht werden, dass beim Aufwalzen des Lagerkörpers 16 auf den Trägerkörper 15 der Lagerkörper 16 geringfügig plastisch verformt wird, um eine besonders gute Verbindung des Lagerkörpers 16 mit dem Trägerkörper 15 zu erreichen. Insbesondere kann dadurch erreicht werden, dass der Lagerkörper 16, insbesondere die Gleitfläche 17, eine Oberfläche mit einer engen Lagetoleranz aufweisen.

In einem weiteren Verfahrensschritt kann nun der Trägerkörper 15 mit dem daran befestigten Lagerkörper 16 in Rotation versetzt werden, wobei der Lagerkörper 16 durch das Walzwerkzeug 44 auf den Trägerkörper 15 aufgewalzt wird bzw. an diesen angepresst wird. Nach dem Durchführen einer vollständigen Rotation kann nun das zweite Längsende 22 des Lagerkörpers 16 mittels des zweiten Klemmelementes 27 am Trägerkörper 15 befestigt werden.

In einer Alternative zum obig beschriebenen Aufbringverfahren kann vorgesehen sein, dass der Trägerkörper 15 stillsteht und der Lagerkörper 16 durch Rotation des Walzwerkzeuges 44 um den Trägerkörper 15 an den Trägerkörper 15 angepresst wird.

In einer weiteren alternativen Ausführungsvariante kann vorgesehen sein, dass anstatt des Walzwerkzeuges 44 ein feststehendes Formelement verwendet wird, welches am Lagerkörper 16 abstreift. Der Lagerkörper 16 kann hierbei mittels des feststehenden Formelementes an den Trägerkörper 15 angepresst werden. Insbesondere kann hierbei vorgesehen sein, dass der Lagerkörper 16 und der Trägerkörper 15 um eine Mittelachse des Trägerkörpers 15 rotieren.

Fig. 10 zeigt ein weiteres Ausführungsbeispiel zur Befestigung des Lagerkörpers 16 am Trägerkörper 15, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

Wie aus Fig. 10 ersichtlich, kann vorgesehen sein, dass das erste Längsende 21 des Lagerkörpers 16 mittels einer ersten stoffschlüssigen Verbindung 46, wie etwa einer Schweißnaht oder einer Lötnaht am Trägerkörper 15 befestigt ist. Weiters kann vorgesehen sein, dass das zweite Längsende 22 des Lagerkörpers 16 mittels einer zweiten stoffschlüssigen Verbindung 47, wie etwa einer Schweißnaht oder einer Lötnaht am Trägerkörper 15 befestigt ist. Weiters kann vorgesehen sein, dass das erste Längsende 21 des Lagerkörpers 16 in der Ausnehmung 20 aufgenommen ist und das zweite Längsende 22 des Lagerkörpers 16 in einer weiteren Ausnehmung 48 aufgenommen ist.

Bei der Herstellung des Mehrschichtgleitlagers 14 kann hierbei nach dem Einsetzen des ersten Längsendes 21 des Lagerkörpers 16 in die Ausnehmung 20 die erste stoffschlüssige Verbindung 46 hergestellt werden. Anschließend kann mittels des Walzwerkzeuges 44 der Lagerkörper 16 auf den Trägerkörper 15 aufgewalzt werden und zum Schluss das zweite Längsende 22 des Lagerkörpers 16 in die weitere Ausnehmung 48 eingesteckt werden und die zweite stoffschlüssige Verbindung 47 hergestellt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlagengetriebe | 30 | Zweite Klemmgegenfläche |
| 2 | Sonnenrad | 31 | Verzahnung |
| 3 | Welle | 32 | erster Öffnungswinkel |
| 4 | Planetenrad | 33 | Symmetrieebene |
| 5 | Verzahnung Sonnenrad | 34 | zweiter Öffnungswinkel |
| 6 | Verzahnung Planetenrad | 35 | Ausnehmungsöffnungswinkel |
| 7 | Planetenradachse | 36 | Erste Klemmgleitfläche |
| 8 | Planetenträger | 37 | zweite Klemmgleitfläche |
| 9 | erster Aufnahmeabschnitt | 38 | Erste Klemmgleitschicht |
| 10 | zweiter Aufnahmeabschnitt | 39 | zweite Klemmgleitschicht |
| 11 | Hohlrad | 40 | Erste Freistellung |
| 12 | Innenverzahnung | 41 | Feder |
| 13 | Rotorwelle | 42 | Oberflächenstrukturierung |
| 14 | Mehrschichtgleitlager | 43 | Lagerkörperdicke |
| 15 | Trägerkörper | 44 | Walzwerkzeug |
| 16 | Lagerkörper | 45 | Walzwerkzeugabstand |
| 17 | Gleitfläche | 46 | erste stoffschlüssige Verbindung |
| 18 | Gegenfläche | 47 | zweite stoffschlüssige Verbindung |
| 19 | Außenmantelfläche | 48 | weitere Ausnehmung |
| 20 | Ausnehmung | | |
| 21 | Erstes Längsende | | |
| 22 | Zweites Längsende | | |
| 23 | Erste Klemme | | |
| 24 | Erstes Befestigungsmittel | | |
| 25 | Erste Klemmfläche | | |
| 26 | Erste Klemmgegenfläche | | |
| 27 | Zweite Klemme | | |
| 28 | Zweites Befestigungsmittel | | |
| 29 | Zweite Klemmfläche | | |

## Patentansprüche

1. Mehrschichtgleitlager (14) umfassend:
- einen Trägerkörper (15) mit einer Außenmantelfläche (19);
- einen Lagerkörper (16), welcher als Blechstreifen mit einem ersten Längsende (21) und einem zweiten Längsende (22) ausgebildet ist und die Außenmantelfläche (19) des Trägerkörpers (15) umschlingt;
**dadurch gekennzeichnet, dass**
das erste Längsende (21) des Lagerkörpers (16) am Trägerkörper (15) befestigt ist und dass das zweite Längsende (22) des Lagerkörpers (16) am Trägerkörper (15) befestigt ist.

2. Mehrschichtgleitlager (14) nach Anspruch 1, **dadurch gekennzeichnet, dass** der Trägerkörper (15) an der Außenmantelfläche (19) eine Ausnehmung (20) aufweist, wobei das erste Längsende (21) des Lagerkörpers (16) in der Ausnehmung (20) aufgenommen ist und mittels
einer formschlüssigen Verbindung oder
einer kraftschlüssigen Verbindung am Trägerkörper (15) befestigt ist.

3. Mehrschichtgleitlager (14) nach Anspruch 2, **dadurch gekennzeichnet, dass** eine erste Klemme (23) ausgebildet ist, wobei die erste Klemme (23) in der Ausnehmung (20) aufgenommen ist, wobei die erste Klemme (23) mittels eines ersten Befestigungsmittels (24), insbesondere einer Schraube, mit dem Trägerkörper (15) gekoppelt ist, wobei das erste Längsende (21) des Lagerkörpers (16) zwischen einer ersten Klemmfläche (25) der ersten Klemme (23) und einer ersten Klemmgegenfläche (26) des Trägerkörpers (15) geklemmt ist.

4. Mehrschichtgleitlager (14) nach Anspruch 3, **dadurch gekennzeichnet, dass** eine zweite Klemme (27) ausgebildet ist, wobei die zweite Klemme (27) in der Ausnehmung (20) aufgenommen ist, wobei die zweite Klemme (27) mittels eines zweiten Befestigungsmittels (28), insbesondere einer Schraube, mit dem Trägerkörper (15) gekoppelt ist, wobei das zweite Längsende (22) des Lagerkörpers (16) zwischen einer zweiten Klemmfläche (29) der zweiten Klemme (27) und einer zweiten Klemmgegenfläche (30) des Trägerkörpers (15) geklemmt ist.

5. Mehrschichtgleitlager (14) nach Anspruch 3 oder 4, **dadurch gekennzeichnet, dass** die erste Klemmfläche (25) und/oder die erste Klemmgegenfläche (26) und/oder die zweite Klemmfläche (29) und/oder die zweite Klemmgegenfläche (30) eine Verzahnung (31) aufweist.

6. Mehrschichtgleitlager (14) nach einem der Ansprüche 3 bis 5, **dadurch gekennzeichnet, dass** die erste Klemme (23) eine erste Klemmgleitfläche (36) aufweist, wobei die erste Klemmgleitfläche (36) an einer ersten Klemmgleitschicht (38) ausgebildet ist.

7. Mehrschichtgleitlager (14) nach einem der Ansprüche 3 bis 5, **dadurch gekennzeichnet, dass** die erste Klemme (23) und/oder die zweite Klemme (27) gegenüber der Außenmantelfläche (19) des Trägerkörpers (15) nach innen versetzt angeordnet sind.

8. Mehrschichtgleitlager (14) nach einem der Ansprüche 3 bis 5, **dadurch gekennzeichnet, dass**
die erste Klemme (23) eine erste Freistellung (40) aufweist, welche im Wirkbereich des ersten Befestigungsmittels (24) angeordnet ist, wodurch die erste Klemme (23) federelastisch (41) ausgebildet ist
oder
dass zwischen der ersten Klemme (23) und dem ersten Befestigungsmittel (24) eine Feder (41) angeordnet ist.

9. Mehrschichtgleitlager (14) nach einem der vorhergehenden Ansprüche, **dadurch gekennzeichnet, dass** der Trägerkörper (15) an der Außenmantelfläche (19) eine Oberflächenstrukturierung (42) aufweist.

10. Mehrschichtgleitlager (14) nach einem der vorhergehenden Ansprüche, **dadurch gekennzeichnet, dass** der Lagerkörper (16) eine Lagerkörperdicke (43) zwischen 0,1mm und 5mm, insbesondere zwischen 0,5mm und 3mm, bevorzugt zwischen 1mm und 1,5mm aufweist.

11. Windkraftanlagengetriebe (1), welches ein Planetengetriebe ist, umfassend:
- einen Planetenträger (8);
- ein Planetenrad (4);
- eine Planetenradachse (7);
**dadurch gekennzeichnet, dass**
die Planetenradachse (7) als Mehrschichtgleitlager (14) nach einem der vorhergehenden Ansprüche ausgebildet ist,
oder an der Planetenradachse (7) ein Mehrschichtgleitlager (14) nach einem der vorhergehenden Ansprüche angeordnet ist, insbesondere dass die Planetenradachse (7) fest im Planetenträger (8) aufgenommen ist und das Planetenrad (4) drehbar an der Planetenradachse (7) aufgenommen ist.

12. Verfahren zum Herstellen eines Mehrschichtgleitlagers (14), insbesondere eines Mehrschichtgleitlagers (14) nach einem der Ansprüche 1 bis 10, umfassend die Verfahrensschritte:
- Bereitstellen eines Trägerkörpers (15) mit einer Außenmantelfläche (19);
- Bereitstellen eines Lagerkörpers (16), welcher als Blechstreifen mit einem ersten Längsende (21) und einem zweiten Längsende (22) ausgebildet ist;
- Befestigen des ersten Längsendes (21) des Lagerkörpers (16) am Trägerkörper (15);
- Kontinuierliches Anlegen des Lagerkörpers (16) an die Außenmantelfläche (19) des Trägerkörpers (15);
- Befestigen des zweiten Längsendes (22) des Lagerkörpers (16) am Trägerkörper (15).

13. Verfahren nach Anspruch 12, **dadurch gekennzeichnet, dass** zum kontinuierlichen Anlegen des Lagerkörpers (16) an die Außenmantelfläche (19) des Trägerkörpers (15) ein Walzwerkzeug (44) an den Trägerkörper (15) angepresst wird, wobei der Lagerkörper (16) zwischen dem Walzwerkzeug (44) und dem Trägerkörper (15) angeordnet ist und wobei das Walzwerkzeug (44) ortsfest angeordnet ist, wobei der Trägerkörper (15) um eine Trägerkörpermittelachse gedreht wird und der Lagerkörper (16) zwischen das Walzwerkzeug (44) und den Trägerkörper (15) eingezogen wird
oder
der Trägerkörper (15) ortsfest angeordnet ist, wobei das Walzwerkzeug (44) um eine Trägerkörpermittelachse geführt wird und der Lagerkörper (16) zwischen das Walzwerkzeug (44) und den Trägerkörper (15) eingezogen wird.

14. Verfahren nach Anspruch 12 oder 13, **dadurch gekennzeichnet, dass** der Lagerkörper (16) nach dem Befestigen am Trägerkörper (15) mittels eines spanabhebenden Verfahrens, insbesondere durch Drehen, bearbeitet wird.

15. Verfahren zum Warten eines Mehrschichtgleitlagers (14) nach einem der Ansprüche 1 bis 10 umfassend die Verfahrensschritte:
- Entfernen des Lagerkörpers (16) vom Trägerkörper (15);
- Bereitstellen eines neuen Lagerkörpers (16), welcher als Blechstreifen mit einem ersten Längsende (21) und einem zweiten Längsende (22) ausgebildet ist;
- Befestigen des ersten Längsendes (21) des neuen Lagerkörpers (16) am Trägerkörper (15);
- Kontinuierliches Anlegen des neuen Lagerkörpers (16) an die Außenmantelfläche (19) des Trägerkörpers (15);
- Befestigen des zweiten Längsendes (22) des neuen Lagerkörpers (16) am Trägerkörper (15).
